# EUROPÄISCHE PATENTSCHRIFT

(11) **EP 1 988 340 B1**
(45) Veröffentlichungstag und Bekanntmachung des Hinweises auf die Patenterteilung: **29.07.2009**
(21) Anmeldenummer: 08001087.9
(22) Anmeldetag: 22.01.2008
(51) Int. Cl.: F24D 3/14, F24D 19/02, F24D 19/06, F28D 1/053, F28F 9/00, F28F 1/30, F28F 1/32

(54) **Unterflurkonvektor**
Subfloor convector
convecteur installé sous plancher

(30) Priorität: 03.03.2007 DE 102007010340
(43) Veröffentlichungstag der Anmeldung: 05.11.2008
(73) Patentinhaber: GEA Air Treatment GmbH, 44625 Herne (DE)
(72) Erfinder: Nobis, Volkhard, Dr., 40667 Meerbusch (DE); Kozlowski, Klaus, 44653 Herne (DE)
(74) Vertreter: COHAUSZ DAWIDOWICZ HANNIG & SOZIEN

(56) Entgegenhaltungen:
- EP-A- 0 892 222
- EP-A- 1 154 204
- DE-A1- 2 144 437
- DE-A1- 2 800 206
- DE-U1- 8 713 073
- DE-U1- 20 014 764
- DE-U1- 20 303 999
- DE-U1- 29 910 037
- GB-A- 1 471 887
- NL-C1- 1 024 423

## Beschreibung

Die Erfindung betrifft einen Unterflurkonvektor mit einem im Boden eingelassenen Hohlraum, der insb. von einer Gerätewanne gebildet ist und einem den Hohlraum insb. die Wanne an der Oberseite abdeckenden Gitterrost mit waagerechten Profilen, wobei im Hohlraum insb. in der Gerätewanne ein Konvektionsbleche aufweisender Wärmetauscher angeordnet ist. Ein solcher Unterflurkonvektor wird z.B. in DE 299 10 037 U1 beschrieben.

Die Bauhöhe eines im Boden eingelassenen Unterflurkonvektors spielt eine erhebliche Rolle, da in der Regel die übliche Höhe eines Estrichbodens einschließlich der unter dem Estrich liegenden Dämmschicht nicht ausreicht, um das Gerät unterzubringen. Deswegen wird in der Regel der Estrich dicker ausgeführt, wodurch sich die Geschosshöhen und die Baukosten erhöhen. Ferner sind die bekannten Unterflurkonvektoren schwer zu reinigen.

Aufgabe der Erfindung ist es, einen Unterflurkonvektor derart zu verbessern, dass bei einfacher Konstruktion und Herstellung eine geringe Bauhöhe bei ausreichender Konvektion erreichbar ist. Ferner ist es Aufgabe der Erfindung, einen Konvektor der eingangs genannten Art derart zu verbessern, dass er leicht zu reinigen ist.

Diese Aufgaben werden erfindungsgemäß dadurch gelöst, dass die Konvektionsbleche des Wärmetauschers den Gitterrost tragen .

Da die Konvektionsbleche des Wärmetauschers für den Gitterrost eine tragende Funktion übernommen haben, kann die Bauhöhe des Konvektors wesentlich geringer sein, so dass der Konvektor in den Boden von Räumen mit normaler Estrichhöhe eingelassen werden kann, ohne über die Bodenoberkante vorzustehen. Damit wird eine Erhöhung der Baukosten vermieden. Auch besteht erstmals die Option des Einbaus in bestehende Objekte. Darüber hinaus sind große und strömungsgünstige Durchströmungsquerschnitte und Flächen für eine natürliche Konvektion ohne Gebläseunterstützung erreichbar. Ferner wird durch die Einheit von Gitterrost und Wärmetauscher die Herstellung vereinfacht und ein Reinigen erleichtert.

Vorzugsweise wird vorgeschlagen, dass der Gitterrost mit seinen Profilen auf der Oberseite der Konvektionsbleche befestigt ist. Auch ist von Vorteil, wenn der Gitterrost die Oberseite des Wärmetauschers bildet. Vorzugsweise wird vorgeschlagen, dass die waagerechten Profile des Gitterrostes quer zur Längserstreckung der Konvektionsbleche angeordnet sind.

Eine besonders einfache Konstruktion und Herstellung und eine geringe Bauhöhe werden erreicht, wenn die im Wesentlichen senkrechten Konvektionsbleche an ihrem oberen Rand Vorsprünge und/oder Ausnehmungen bilden, an und/oder in denen die Profile des Gitterrostes befestigt sind. Hierbei können zwischen den metallenen Profilen des Gitterrostes und den Vorsprüngen und/oder Ausnehmungen der Konvektionsbleche Kunststoffteile insb. Kunststoffprofile als Wärmedämmung befestigt sein. Dies verhindert eine Wärmeleitung zwischen den Profilen und den Konvektionsblechen, so dass die Profile nur eine geringe Temperaturhöhe erreichen und sichergestellt ist, dass man sich an diesen nicht verbrennen kann.

Eine formschlüssige Verbindung zwischen den Profilen und den Konvektionsblechen wird erreicht, wenn die Profile des Gitterrostes oder die Kunststoffprofile an den Vorsprüngen und/oder in den Ausnehmungen der Konvektionsbleche durch eine Rastverbindung insb. eine Clipverbindung gehalten sind. Dies verbessert Konstruktion, Montage und die Auswechselbarkeit der Teile.

Auch kann die Oberseite des WAT eben ausgeführt sein. Dann können sehr flache Gitter oder Gittermatten aufgelegt werden. Die Gitter oder Gittermatten haben keine tragende Funktion und können doch flach ausgeführt werden.

Eine statisch und konstruktiv besonders günstige Ausführung wird geschaffen, wenn die Konvektionsbleche an ihrer Unterseite konvex gewölbt sind. Hierbei entspricht vorteilhafterweise die konvexe Wölbung dem Momentenverlauf der statischen Belastung. Damit können die Konvektionsbleche bezüglich des Momentenverlaufs bei statischer Belastung optimiert werden bei geringer Höhe der Konvektionsbleche und damit des gesamten Aufbaus.

Neben der Anpassung des Widerstandsmomentes der Konvektionsbleche durch die konvexe Form findet sich hierdurch gleichfalls die Optimierung des freien Zuströmquerschnittes Berücksichtigung.

Mit zunehmender Einströmung des Luftstroms zur Gerätemitte reduziert sich dieser aufgrund der über den Weg aufsteigenden Luftmassenstromanteile. Dadurch kann das Konvektionsblech in der Fläche optimiert und die Wärmeübertragungsleistung maximiert werden. Die konvexe Form der Konvektionsbleche ist eine Optimierung zur Stabilität und gleichfalls zur freien konvektiven Wärmeübertragung.

Besonders vorteilhaft ist es, wenn Konvektionsbleche von mehreren Rohrleitungen durchdrungen sind, die das Wärme- und/oder Kühlmedium führen. Hierdurch bilden die Rohre nicht nur eine Wärmebrücke zu den Konvektionsblechen, sondern sind gleichzeitig ein tragendes Bauteil. Die Rohrleitungen bilden somit mit den Konvektionsblechen eine bauliche Einheit hoher Festigkeit. Dies kann noch dadurch verbessert werden, dass die für die Rohrleitungen in den Konvektionsblechen eingebrachten Öffnungen ringförmig Kragen an ihrem Rand bilden, die die Rohrleitungen formschlüssig und insb. kraftschlüssig umfassen.

Auch ist von Vorteil, dass der Gitterrost zusammen mit den Konvektionsblechen und Rohrleitungen ein Teil bildet, das anhebbar insb. um eine Achse hochklappbar ist, so dass der Innenraum des Konvektors und auch der Wärmetauscher leicht erreichbar sind. Dies erleichtert die Reinigung und Wartung.

Um die natürliche Konvektion zu verbessern wird vorgeschlagen, dass zu beiden Endseiten der Konvektionsbleche Luftleitbleche angeordnet sind. Hierbei können die Isolinien (Linien mit Punkten gleicher Höhe) der Luftleitbleche rechtwinklig zu der Längsausrichtung der Konvektionsbleche verlaufen, um die Luft zwischen die Konvektionsbleche widerstandsarm zu führen.

Wird ein stärkeres Durchströmen des Konvektors gewünscht, so kann zu einer oder beiden der Konvektionsbleche bzw. des Wärmetauschers mindestens ein Gebläse angeordnet sein.

Vorzugsweise wird vorgeschlagen, dass die senkrechten Konvektionsbleche zueinander parallel angeordnet sind. Auch ist von Vorteil, wenn die senkrechten Konvektionsbleche zueinander parallel angeordnet sind. Hierdurch weist das Bauteil aus Gitterost und Konvektionsblechen eine Anordnung von tragenden und nicht tragenden Konvektionsblechen auf. Dies ist dann von Vorteil, wenn für das Abfangen statischer Belastungen des Gitterrostes nicht alle Konvektionsbleche erforderlich sind. In diesem Fall kann bei einigen Konvektionsblechen die Materialstärke zugunsten einer optimalen Wärmeübertragung verringert werden. Durch eine geringere Materialstärke der Konvektionsbleche können mehr Konvektionsbleche über die Länge eingebaut und damit eine höhere Leistung erreicht werden.

Ein Ausführungsbeispiel der Erfindungen ist in den Zeichnungen dargestellt und wird im Folgenden einschließlich Alternativen beschrieben.

Es zeigen:
- Figur 1: einen senkrechten Schnitt durch den Unterflurkonvektor im geschlossenen Zustand,
- Figur 2: den Konvektor im geöffneten Zustand,
- Figur 3: eine perspektivische Ansicht des Konvektors im geöffneten Zustand und

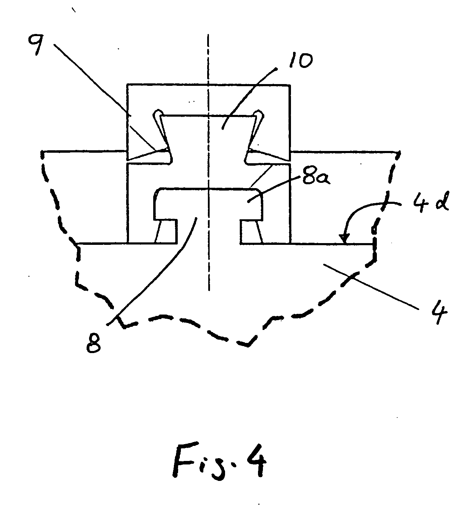

- Figur 4: eine vergrößerte Darstellung der Befestigung des Gitterrost-Profiles auf einem Konvektionsblech.

Der Unterflurkonvektor weist ein quaderförmiges Gehäuse 1 aus Blech mit offener Oberseite auf, das auch als Wanne bezeichnet werden kann. Das Gehäuse 1 umgibt den Wärmetauscher 2 und ist oben durch einen waagerechten Gitterost 3 abgedeckt.

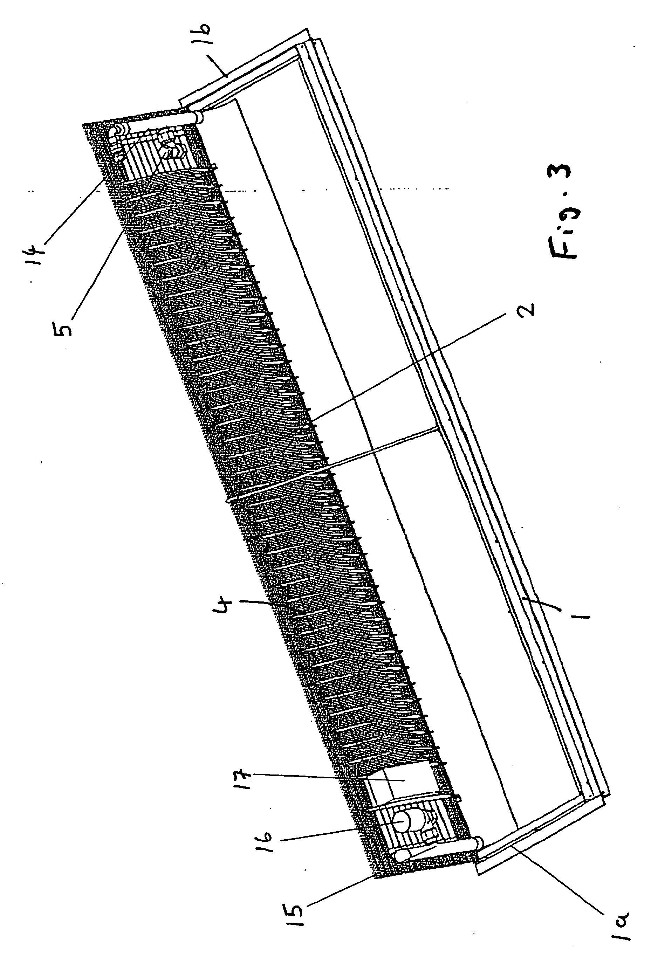

Der Wärmetauscher 2 weist senkrecht und parallel nebeneinander angeordnete Konvektionsbleche 4 auf, die von mehreren Rohrleitungen 5 durchquert sind, die ein Wärme- und/oder Kühlmedium führen. Die Anzahl der Konvektionsbleche 4 ist in der Regel höher als die der Rohrleitungen 5. So sind in dem in Figur 3 dargestellten Ausführungsbeispiel 38 Konvektionsbleche von 11 Rohrleitungen durchquert, wobei die Konvektionsbleche 4 und Rohrleitungen 5 eine feste bauliche Einheit bilden, die erheblichen von oben kommenden Drücken stand hält. Der Zusammenhalt dieser Teile ist hierbei noch dadurch verbessert, dass die Öffnungen 6 im Konvektionsblech 4 mit ihrem Rand jeweils einen ringförmigen Kragen bilden, der die Rohrleitung eng umfasst und damit form- und kraftschlüssig einen sicheren Halt, insb. klemmend erzeugt.

Die beiden seitlichen Enden 4a und 4b jedes Konvektionsblechs 4 liegen auf einen Blechrand 7 auf, der an beiden Seitenwänden 1 a und 1 b des Gehäuses 1 innen vorsteht. Die Unterseite 4c (unterer Rand) jedes Konvektionsblechs 4 ist nach unten hin konvex gewölbt, wobei sie den Momentenverlauf der statischen Belastung entspricht, die auf den Gitterost von oben ausgeübt werden kann. Im Ausführungsbeispiel weist damit das Konvektionsblech 4 die Form eines Kreissegmentes auf. Die konvexe Wölbung ist gleichfalls als strömungsgünstig zu bezeichnen, wodurch trotz fehlender Auftriebshöhe erforderliche Wärmeübertragungsleistungen erreicht werden.

Die obere Seite bzw. der obere Rand 4d des Konvektionsblechs 4 bildet nach oben ragende Vorsprünge 8 mit jeweils einem verbreiterten Ende als Kopf 8a, so dass die Vorsprünge 8 in etwa pilzförmig gestaltet sind. Auf diesen in regelmäßigen Abständen angeformten Vorsprüngen 8 sind quer zur Ausrichtung der Konvektionsbleche 4 Gitterrost-Profile 9 insb. auch aus Aluminium klemmend befestigt. Die Profile 9 sind damit über die Vorsprünge 8 von mehreren oder allen Konvektionsblechen 4 gehalten, soweit die Konvektionsbleche Vorsprünge 8 aufweisen. Hierbei kann es ausreichen, dass nur jedes zweite oder dritte Konvektionsblech 4 Vorsprünge 8 bildet und damit nur diese die Profile 9 stützen.

Die Profile 9 sind entweder direkt an den Vorsprüngen 8 befestigt insb. angeklemmt, oder aber zwischen den Profilen 9 und den Vorsprüngen 8 ist ein Kunststoffprofil 10 angeordnet, um eine Wärmedämmung zu erreichen, die dafür sorgt, dass die Wärme des Konvektionsbleches im Wesentlichen nicht auf das Profil 9 übertragen wird. Damit wird verhindert, dass bei einem Berühren der Profile 9 und damit des Gitterostes keine zu heißen Teile erreicht werden. Sowohl die Befestigung des Profils 9 am Kunststoffprofil 10 als auch des Kunststoffprofils 10 an den Vorsprüngen 8 der Konvektionsbleche sind form- und/oder kraftschlüssig und insb. Clips- oder Rastverbindungen, so dass die Profile leicht auswechselbar sind.

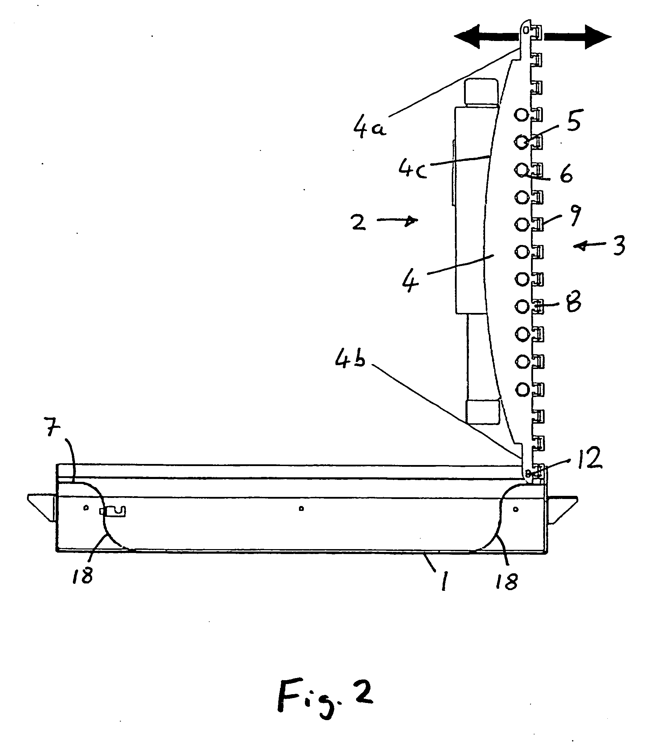

Die Konvektionsbleche 4 bilden zusammen mit den Rohrleitungen 5 und den Gitterrost-Profilen 9 sowie den an den Rohrleitungen 5 endseitig befestigten Verteilern und Sammlern eine bauliche Einheit hoher Stabilität, die als Ganzes aus dem Gehäuse 1 entnommen und/oder um eine seitliche Achse 12 senkrecht hochklappbar ist, wie dies in den Figuren 2 und 3 dargestellt ist. Aus Figur 3 ist auch der Sammler 14 auf einer Endseite der Rohre 5 und der Verteiler 15 auf der anderen Seite der Rohre 5 dargestellt. Ferner ist dort auch ein Vorlaufventil 16 und ein Regelungskasten 17 ersichtlich.

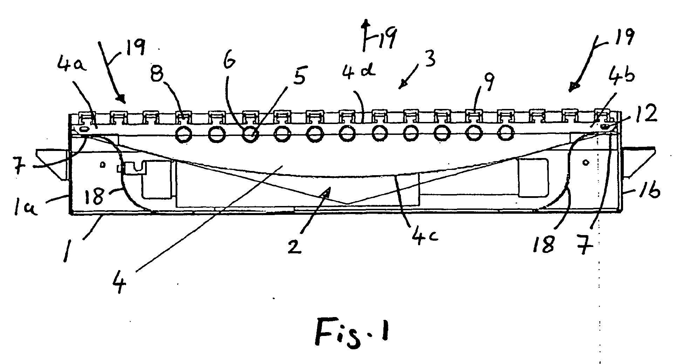

Im Innenraum des Gehäuses 1 sind seitlich Luftleitbleche 18 wie in den Figuren 1 und 3 dargestellt. Diese vorzugsweise im Querschnitt S-förmigen Bleche sorgen dafür, insb. bei einer natürlichen Konvektion, dass die Luft von den Seiten her eindringt und im mittleren Bereich der Vorrichtung austritt wie durch die Pfeile 19 in Figur 1 dargestellt. Damit kann auch bei einer niedrigen Bauhöhe eine ausreichende Konvektion erreicht werden. Zusätzlich oder statt der Luftleitbleche können aber auch nicht dargestellte Gebläse zu beiden Seiten der Konvektionsbleche bzw. des Wärmetauschers 2 angeordnet sein.

## Patentansprüche

1. Unterflurkonvektor mit einem im Boden eingelassenen Hohlraum, der insb. von einer Gerätewanne (1) gebildet ist und einem den Hohlraum insb. die Wanne an der Oberseite abdeckenden Gitterrost (3) mit waagerechten Profilen (9), wobei im Hohlraum insb. in der Gerätewanne ein Konvektionsbleche (4) aufweisender Wärmetauscher (2) angeordnet ist,
**dadurch gekennzeichnet,dass** die Konvektionsbleche (4) des Wärmetauschers (2) den Gitterrost (3) tragen.

2. Unterflurkonvektor nach Anspruch 1, **dadurch gekennzeichnet, dass** der Gitterrost (3) mit seinen Profilen (9) auf der Oberseite der Konvektionsbleche (4) befestigt ist.

3. Unterflurkonvektor nach Anspruch 1 oder 2, **dadurch gekennzeichnet, dass** der Gitterrost (3) die Oberseite des Wärmetauschers bildet.

4. Unterflurkonvektor nach einem der vorherigen Ansprüche, **dadurch gekennzeichnet, dass** die waagerechten Profile (9) des Gitterrostes (3) quer zur Längserstreckung der Konvektionsbleche (4) angeordnet sind.

5. Unterflurkonvektor nach einem der vorherigen Ansprüche, **dadurch gekennzeichnet, dass** die im wesentlichen senkrechten Konvektionsbleche (4) an ihrem oberen Rand Vorsprünge und/oder Ausnehmungen bilden, an und/oder in denen die Profile (9) des Gitterrostes (3) befestigt sind.

6. Unterflurkonvektor nach Anspruch 5, **dadurch gekennzeichnet, dass** zwischen den metallenen Profilen (9) des Gitterrostes (3) und den Vorsprüngen und/oder Ausnehmungen der Konvektionsbleche (4) Kunststoffteile insb. Kunststoffprofile (10) als Wärmedämmung befestigt sind.

7. Unterflurkonvektor nach Anspruch 5 oder 6, **dadurch gekennzeichnet, dass** die Profile (9) des Gitterrostes (3) oder die Kunststoffprofile (10) an den Vorsprüngen und/oder in den Ausnehmungen der Konvektionsbleche (4) durch eine Rastverbindung insb. eine Clipverbindung gehalten sind.

8. Unterflurkonvektor nach einem der vorherigen Ansprüche **dadurch gekennzeichnet, dass** die Konvektionsbleche (4) an ihrer Unterseite konvex gewölbt sind.

9. Unterflurkonvektor nach einem der vorherigen Ansprüche, **dadurch gekennzeichnet, dass** die Konvexwölbung eine strömungstechnisch günstige Form aufweisen.

10. Unterflurkonvektor nach Anspruch 8, **dadurch gekennzeichnet, dass** die Konvexwölbung dem Momentenverlauf der statischen Belastung entspricht.

11. Unterflurkonvektor nach einem der vorherigen Ansprüche, **dadurch gekennzeichnet, dass** Konvektionsbleche (4) von mehreren Rohrleitungen (5) durchdrungen sind, die das Wärme- und/oder Kühlmedium führen.

12. Unterflurkonvektor nach Anspruch 10, **dadurch gekennzeichnet, dass** die für die Rohrleitungen (5) in den Konvektionsblechen (4) eingebrachten Öffnungen ringförmig Kragen an ihrem Rand bilden, die die Rohrleitungen formschlüssig und insb. kraftschlüssig umfassen.

13. Unterflurkonvektor nach einem der vorherigen Ansprüche, **dadurch gekennzeichnet, dass** der Gitterrost (3) zusammen mit den Konvektionsblechen (4) und Rohrleitungen (5) ein Teil bildet, das anhebbar insb. um eine Achse hochklappbar ist.

14. Unterflurkonvektor nach einem der vorherigen Ansprüche, **dadurch gekennzeichnet, dass** das Ventil (16), der Regelungskasten (17) und die Ventilatoren am Wärmetauscher befestigt sind und beim Hochklappen des Wärmetauschers mit anhebbar sind.

15. Unterflurkonvektor nach einem der vorherigen Ansprüche, **dadurch g ekennzeichnet**, dass zu beiden Endseiten der Konvektionsbleche (4) Luftleitbleche (18) angeordnet sind.

16. Unterflurkonvektor nach Anspruch 15, **dadurch gekennzeichnet, dass** die Isolinien (Linien mit Punkten gleicher Höhe) der Luftleitbleche rechtwinklig zu der Längsausrichtung der Konvektionsbleche (4) verlaufen, um die Luft zwischen die Konvektionsbleche (4) widerstandsarm zu führen.

17. Unterflurkonvektor nach einem der vorherigen Ansprüche, **dadurch gekennzeichnet, dass** zu einer oder beiden der Konvektionsbleche (4) bzw. des Wärmetauschers (2) mindestens ein Gebläse angeordnet ist.

18. Unterflurkonvektor nach einem der vorherigen Ansprüche, **dadurch gekennzeichnet, dass** die senkrechten Konvektionsbleche (4) zueinander parallel angeordnet sind.

19. Unterflurkonvektor nach einem der vorherigen Ansprüche, **dadurch gekennzeichnet, dass** eine flexible Verbindung zwischen Wärmetauscher und den bauseitigen Anschlüssen für Wärme- und/oder Kühlmedium vorhanden ist.

## Claims

1. Subfloor convector with a cavity let into the floor, which is formed by an equipment trough (1) in particular, and a grille (3) with horizontal sections (9) covering the top of the cavity, particularly the trough, in which a heat exchanger (2) with convection plates (4) is arranged in the cavity, particularly the equipment trough, **characterised in that** the convection plates (4) of the heat exchanger (2) carry the grille (3).

2. Subfloor convector according to claim 1, **characterised in that** the grille (3) is fastened to the top of the convection plates (4) by its sections (9).

3. Subfloor convector according to claim 1 or 2, **characterised in that** the grille (3) forms the top of the heat exchanger.

4. Subfloor convector according to one of the previous claims,
**characterised in that** the horizontal sections (9) of the grille (3) are arranged crossways to the longitudinal extension of the convection plates (4).

5. Subfloor convector according to one of the previous claims,
**characterised in that** at the top edges the essentially vertical convection plates (4) form projections and/or recesses, onto and/or into which the sections (9) of the grille (3) are fastened.

6. Subfloor convector according to claim 5, **characterised in that** plastic parts, particularly plastic sections (19), are fastened between the metal sections (9) of the grille (3) and the projections and/or recesses of the convection plates (4) as heat insulation.

7. Subfloor convector according to claim 5 or 6, **characterised in that** the sections (9) of the grille (3) or the plastic sections (10) are held on the projections and/or in the recesses of the convection plates (4) by a latching connection, particularly a clip connection.

8. Subfloor convector according to one of the previous claims, **characterised in that** the convection plates (4) have a convex arch on the bottom.

9. Subfloor convector according to one of the previous claims, **characterised in that** the convex arch has a fluidically favourable form.

10. Subfloor convector according to claim 8, **characterised in that** the convex arch corresponds to the moment path of the static load.

11. Subfloor convector according to one of the previous claims,
**characterised in that** the convection plates (4) are penetrated by several pipes (5), which carry the heating and/or cooling medium.

12. Subfloor convector according to claim 10, **characterised in that** the openings made in the convection plates (4) for the pipes (5) form annular collars on the edges, which surround the pipes positively and non-positively in particular.

13. Subfloor convector according to one of the previous claims,
**characterised in that** together with the convection plates (4) and pipes (5) the grille (3) forms a part, which can be lifted and folded up around a shaft in particular.

14. Subfloor convector according to one of the previous claims, **characterised in that** the valve (16), the control box (17) and the ventilators are fastened to the heat exchanger and can be lifted with it, when the heat exchanger is folded up.

15. Subfloor convector according to one of the previous claims, **characterised in that** the air baffle plates (18) are arranged at both ends of the convection plates (4).

16. Subfloor convector according to claim 15, **characterised in that** the isolines (lines with points of the same height) of the air baffle plates run at right angles to the longitudinal alignment of the convection plates (4), in order to guide the air between the convection plates (4) in a low resistance manner.

17. Subfloor convector according to one of the previous claims, **characterised in that** at least one fan is arranged on one or both convection plates (4) or the heat exchanger (2).

18. Subfloor convector according to one of the previous claims,
**characterised in that** the vertical convection plates (4) are arranged parallel to each other.

19. Subfloor convector according to one of the previous claims, **characterised in that** there is a flexible connection between the heat exchanger and connections for the heating and/or cooling medium provided by the customer.

## Revendications

1. Convecteur sous plancher, comprenant une cavité, qui est encastrée dans le plancher et est formée en particulier par un bac d'appareil (1), et une grille (3) recouvrant la cavité, notamment le bac, sur le côté supérieur et comportant des profilés (9) horizontaux, un échangeur de chaleur (2), doté de tôles de convection (4), étant disposé dans la cavité, notamment dans le bac d'appareil, **caractérisé par le fait que** les tôles de convection (4) de l'échangeur de chaleur (2) supportent la grille (3).

2. Convecteur sous plancher selon la revendication 1, **caractérisé par le fait que** la grille (3) est fixée par ses profilés (9) au bord supérieur des tôles de convection (4).

3. Convecteur sous plancher selon la revendication 1 ou 2, **caractérisé par le fait que** la grille (3) constitue la face supérieure de l'échangeur de chaleur.

4. Convecteur sous plancher selon une des revendications précédentes, **caractérisé par le fait que les** profilés (9) horizontaux de la grille (3) sont disposés perpendiculairement à la longueur des tôles de convection (4).

5. Convecteur sous plancher selon une des revendications précédentes, **caractérisé par le fait que** les tôles de convection (4) sensiblement verticales comportent sur leur bord supérieur des sailles et/ou des évidements, sur et/ou dans lesquels sont fixés les profilés (9) de la grille (3).

6. Convecteur sous plancher selon la revendication 5, **caractérisé par le fait que** des éléments en matière plastique, notamment des profilés en matière plastique (10), sont fixés en tant qu'isolation thermique entre les profilés (9) métalliques de la grille (3) et les saillies et/ou évidements des tôles de convection (4).

7. Convecteur sous plancher selon la revendication 5 ou 6, **caractérisé par le fait que** les profilés (9) de la grille (3) ou les profilés en matière plastique (10) sont retenus sur les saillies et/ou dans les évidements des tôles de convection (4) par une liaison par verrouillage, notamment par une liaison à encliquetage.

8. Convecteur sous plancher selon une des revendications précédentes, **caractérisé par le fait que** les tôles de convection (4) présentent une courbure convexe sur leur bord inférieur.

9. Convecteur sous plancher selon une des revendications précédentes, **caractérisé par le fait que** la courbure convexe présente une forme qui est avantageuse du point de vue de l'écoulement.

10. Convecteur sous plancher selon la revendication 8, **caractérisé par le fait que** la courbure convexe correspond à la variation des moments de la charge statique.

11. Convecteur sous plancher selon une des revendications précédentes, **caractérisé par le fait que** les tôles de convection (4) sont traversées par plusieurs conduites (5) qui guident le fluide de chauffage et/ou le fluide de refroidissement.

12. Convecteur sous plancher selon la revendication 10, **caractérisé par le fait que** les ouvertures ménagées dans les tôles de convection (4) pour les conduites (5) comportent sur leurs bords des collets annulaires qui entourent les conduites par complémentarité de formes et notamment par serrage.

13. Convecteur sous plancher selon une des revendications précédentes, **caractérisé par le fait que** la grille (3) forme avec les tôles de convection (4) et les conduites (5) un élément qui peut être relevé, notamment en tournant autour d'un axe

14. Convecteur sous plancher selon une des revendications précédentes, **caractérisé par le fait que** la vanne (16), le boîtier de régulation (17) et les ventilateurs sont fixés à l'échangeur de chaleur et peuvent être relevés en même temps que l'échangeur de chaleur.

15. Convecteur sous plancher selon une des revendications précédentes, **caractérisé par le fait que** des déflecteurs d'air (18) sont disposés aux deux extrémités des tôles de convection (4).

16. Convecteur sous plancher selon la revendication 15, **caractérisé par le fait que** les lignes isométriques (lignes dont les points se situent à la même hauteur) des déflecteurs d'air s'étendent à angle droit par rapport au sens longitudinal des tôles de convection (4), afin de guider l'air avec une faible résistance entre les tôles de convection (4).

17. Convecteur sous plancher selon une des revendications précédentes, **caractérisé par le fait qu'**au moins un ventilateur est installé sur un côté ou sur les deux côtés des tôles de convection (4) ou de l'échangeur de chaleur (2).

18. Convecteur sous plancher selon une des revendications précédentes,
**caractérisé par le fait que** les tôles de convection (4) verticales sont disposées parallèlement les unes aux autres.

19. Convecteur sous plancher selon une des revendications précédentes, **caractérisé par le fait qu'**il existe une liaison flexible entre l'échangeur de chaleur et les raccordements côté construction pour le fluide de chauffage et/ou le fluide de refroidissement.
